# EUROPÄISCHE PATENTSCHRIFT

(11) **EP 2 459 854 B1**
(45) Veröffentlichungstag und Bekanntmachung des Hinweises auf die Patenterteilung: **03.04.2013**
(21) Anmeldenummer: 10720636.9
(22) Anmeldetag: 02.06.2010
(51) Int. Cl.: F01N 3/20

(54) **MONTAGEEINHEIT ZUR BEFESTIGUNG EINES EINSPRITZORGANS AN EINEM ABGASSTRANG**
MOUNTING UNIT FOR FIXING AN INJECTOR ON A EXHAUST GAS LINE
UNITÉ DE MONTAGE POUR FIXER UN INJECTEUR DANS UN LIGNE DE GAZ D'ÉCHAPPEMENT

(30) Priorität: 27.07.2009 DE 102009028030
(43) Veröffentlichungstag der Anmeldung: 06.06.2012
(73) Patentinhaber: Robert Bosch GmbH, 70442 Stuttgart (DE)
(72) Erfinder: BEGANOVIC, Arnad, 70499 Stuttgart-Weilimdorf (DE); STEIN, Stefan, 70195 Stuttgart (DE); GRAGEN, Ralf, 73728 Esslingen (DE); BENITSCH, Jens, 89077 Ulm (DE)
(86) Internationale Anmeldenummer: PCT/EP2010/057694
(87) Internationale Veröffentlichungsnummer: WO 2011/012359

(56) Entgegenhaltungen:
- EP-A1- 1 691 046
- WO-A1-2007/091969
- WO-A2-2008/040363

## Beschreibung

### Stand der Technik

Die vorliegende Erfindung betrifft eine Montageeinheit zur Befestigung eines Einspritzorgans zum Eindosieren eines Fluids in eine Abgasanlage eines Verbrennungsmotors an einem Abgasstrang sowie eine Abgasnachbehandlungsanordnung mit einer derartigen Montageeinheit.

Es ist bekannt, in einem Abgassystem eines Verbrennungsmotors eines Fahrzeugs einen Partikelfilter zu installieren. Handelt es sich bei dem Verbrennungsmotor um einen Dieselmotor, so wirkt der Partikelfilter beispielsweise als Rußfilter und senkt aufgrund seiner Filterwirkung die Feinstaubbelastung. Um zu verhindern, dass sich nach einer bestimmten Einsatzdauer der Filter zusetzt, ist es erforderlich, den Filter von Zeit zu Zeit zu regenerieren. Die Regeneration erfolgt durch Temperaturerhöhung beispielsweise auf rund 600 Grad Celsius, wodurch die Partikel, insbesondere Rußpartikel, verbrennen. Da dies nicht in allen Betriebszuständen durch motorische Maßnahmen möglich ist, wird die Temperaturerhöhung durch Kraftstoff, zum Beispiel Diesel, erzielt, der über ein Einspritzorgan in den Abgasstrang eingespritzt wird. Der eingespritzte Kraftstoff gelangt zu einem Oxidationskatalysator, der vor dem Partikelfilter angeordnet ist. Der in den Oxidationskatalysator gelangende Kraftstoff wird oxidiert bzw. verbrannt und führt zu einer Abgastemperaturerhöhung, so dass entsprechend heiße Abgase zum nachgeschalteten Partikelfilter gelangen und dort die Regeneration bewirken.

In einem anderen Verfahren wird eine Harnstofflösung zur selektiven katalytischen Reduktion von Stickoxiden in Abgasen in einem SCR-Katalysator in den Abgasstrang eingespritzt.

Es besteht daher ein Bedürfnis für eine Vorrichtung, die es ermöglicht, Flüssigkeit in einen Abgasstrang einzuspritzen.

Eine Vorrichtung zum Einbringen eines flüssigen Stoffs in das Abgas einer Brennkraftmaschine wird in DE 10 2007 003 120 A1 beschrieben. DE 10 2006 049 531 A1 und WO2008040363 beschverben beiden eine Verbindungseinheit mit einem Anschluss für ein Dosiermodul zur Montage in einem Abgasstrang einer Brennkraftmaschine.

Im Betrieb wird die Abgasleitung durch die heißen Abgase des Verbrennungsmotors auf ein hohes Temperaturniveau erhitzt. Die hohe Temperatur der Abgasleitung überträgt sich auf das Einspritzorgan. Eine hohe Temperatur am Einspritzorgan führt zu einer Alterung der einzuspritzenden Flüssigkeit und kann so ihre Wirkung nachteilig beeinflussen.

Es ist daher eine Aufgabe der Erfindung, eine Montageeinheit zur Befestigung eines Einspritzorgans an einer Abgasleitung eines Verbrennungsmotors bereitzustellen, die so ausgebildet ist, dass das einzuspritzende Fluid vor dem Einspritzen nicht durch heiße Abgase, die durch die Abgasleitung strömen, übermäßig erhitzt wird.

### Offenbarung der Erfindung

Diese Aufgabe wird durch eine erfindungsgemäße Montageeinheit nach dem unabhängigen Anspruch 1 gelöst. Die abhängigen Ansprüche definieren vorteilhafte Ausgestaltungen einer erfindungsgemäßen Montageeinheit.

Eine erfindungsgemäße Montageeinheit zur Befestigung eines Einspritzorgans an einem Abgasstrang hat einen Haltebereich zur Aufnahme des Einspritzorgans, um ein Fluid, wie z.B. flüssigen (Diesel-)Kraftstoff oder Harnstoff, in den Abgasstrang einzuspritzen, und einen Randbereich. In dem Randbereich ist wenigstens eine Öffnung zur Aufnahme eines Befestigungselementes zur Befestigung der Montageeinheit an dem Abgasstrang vorgesehen. Die Montageeinheit ist so ausgebildet, dass zwischen dem Befestigungselement und dem Haltebereich ein Luftspalt ausgebildet ist, wenn die Montageeinheit mit dem Befestigungselement an dem Abgasstrang befestigt ist.

Um die Montageeinheit an dem Abgasstrang zu befestigen, steht das Befestigungselement in Kontakt mit dem Abgasstrang. Die im Betrieb hohe Temperatur des Abgasstrangs wird so auf das Befestigungselement übertragen. Der erfindungsgemäß ausgebildete Luftspalt isoliert den Haltebereich thermisch von dem Befestigungselement. Durch die thermische Isolation wird die Wärmeübertragung von dem Abgasstrang auf den Haltebereich reduziert. Der Haltebereich hat in der Umgebung des Einspritzorgans eine niedrigeres Temperaturniveau als der Abgasstrang und als das Befestigungselement. Eine durch hohe Temperaturen am Einspritzorgan verursachte Alterung des einzuspritzenden Fluids wird zuverlässig verhindert.

Erfindungs gemäß ist an der zur Aufnahme eines Befestigungselements vorgesehenen Öffnung eine Dehnhülse so angeordnet, dass das Befestigungselement durch die Dehnhülse in die Öffnung einführbar ist. Die Montageeinheit ist so geformt, dass zwischen der Dehnhülse und dem Haltebereich ein Luftspalt ausgebildet ist, wenn die Montageeinheit mit dem Befestigungselement an dem Abgasstrang befestigt ist. Eine thermische Ausdehnung des Befestigungselements wird durch eine entsprechende thermische Ausdehnung der Dehnhülse ausgeglichen und ein Lösen des Befestigungselements bei thermischer Erwärmung wird zuverlässig verhindert. Durch die Verwendung einer Dehnhülse kann die Montageeinheit besonders sicher und zuverlässig auch bei starken Tempera- turschwankungen an dem Abgasstrang befestigt werden.

Die Erfindung umfasst auch eine Abgasnachbehandlungsanordnung zum Einspritzen eines Fluids in einen Abgasstrang mit einer erfindungsgemäßen Montageeinheit und einem Einspritzorgan, das zum Einspritzen des Fluids ausgebildet und im Haltebereich der Montageeinheit angeordnet ist. In einer Ausführungsform ist das Einspritzorgan als Einspritzventil ausgebildet.

In einer Ausführungsform einer erfindungsgemäßen Montageeinheit ist in dem Haltebereich ein Kühlkanal ausgebildet, um ein Kühlmittel, insbesondere Wasser, durch den Haltebereich zu leiten. Durch einen solchen mit Kühlmittel gefüllten Kühlkanal ist die Temperatur im Haltebereich weiter reduzierbar.

In einer weiteren Ausführungsform ist der Kühlkanal mit einem Zulauf und einem Ablauf versehen. Durch einen Zulauf und einen Ablauf kann Kühlmittel in den Kühlkanal geleitet und aus diesem abgeführt werden. Das Kühlmittel kann in einer Kühlvorrichtung, die außerhalb der Montageeinheit vorgesehen ist, gekühlt werden. Hierdurch kann die Temperatur im Haltebereich noch weiter reduziert werden.

In einer weiteren Ausführungsform ist der Kühlkanal auf der zur Montage an dem Abgasstrang vorgesehenen Seite durch ein Kühlblech abgeschlossen. Durch ein Kühlblech wird der Kühlkanal besonders effektiv abgedichtet und kein Kühlmittel kann aus dem Kühlkanal in den Abgasstrang entweichen.

In einer Ausführungsform ist der Haltebereich mit einem glockenförmigen Profil ausgebildet. Ein glockenförmiges Profil des Haltebereichs ermöglicht ein sicheres Halten des Einspritzorgans und stellt gleichzeitig einen isolierenden Luftspalt zwischen dem Befestigungselement und dem Haltebereich zur Verfügung. Ein glockenförmiges Profil ist besonders einfach und kostengünstig herstellbar.

In einer Ausführungsform hat die Dehnhülse die gleiche Wärmeausdehnung wie die Montageeinheit. Dadurch wird eine Wärmeausdehnung des Haltebereichs besonders effektiv ausgeglichen. In einer Ausführungsform sind die Dehnhülsen und der Ventilhalter im Wesentlichen aus dem gleichen Material, z.B. aus X5CrNi18-10, hergestellt.

In einer weiteren Ausführungsform hat die Dehnhülse die gleiche Wärmeausdehnung wie das Befestigungselement, z.B. indem die Dehnhülse aus dem gleichen Material wie das Befestigungselement gefertigt ist. Dadurch wird eine Wärmeausdehnung des Befestigungselements besonders effektiv ausgeglichen.

In einer Ausführungsform ist in dem Haltebereich eine Bohrung zur Aufnahme des Einspritzorgans ausgebildet. In einer solchen Bohrung kann das Einspritzorgan besonders effektiv, sicher und kostengünstig angebracht und mit der Montageeinheit an dem Abgasstrang befestigt werden.

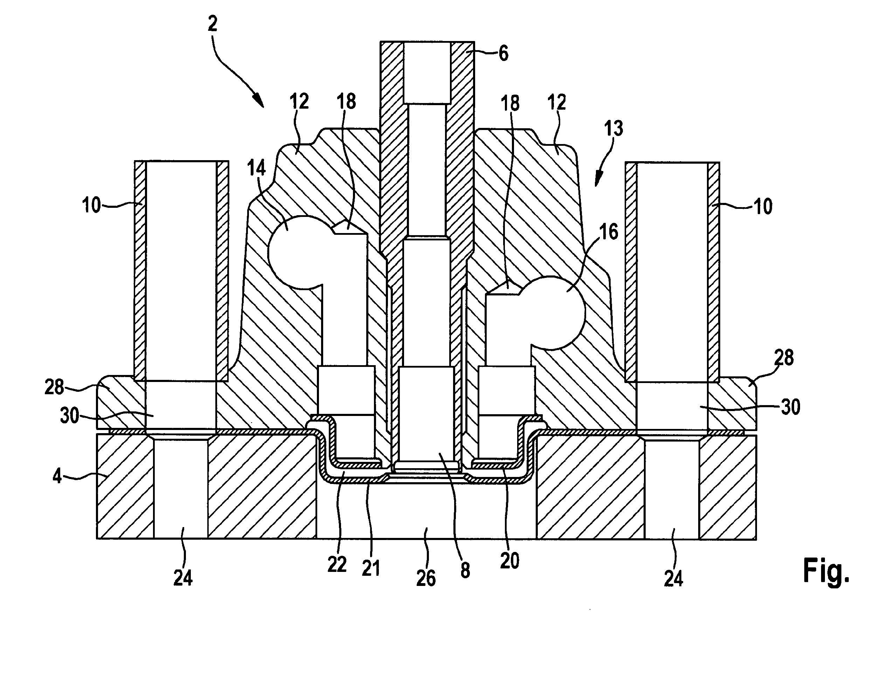

Die Erfindung wird im Folgenden anhand des in der Figur gezeigten Ausführungsbeispiels näher erläutert.

Die Figur zeigt eine schematische Schnittdarstellung einer erfindungsgemäßen Montageeinheit 2, die an einem Flansch 4, der an einem Abgasstrang ausgebildet ist, angebracht ist.

Der Flansch 4 ist in der Figur nur ausschnittsweise dargestellt und weist in der Mitte des gezeigten Bereichs eine Öffnung 26 auf, durch die Fluid in einen unterhalb des Flansches 4 verlaufenden, in der Figur nicht gezeigten Abgaskanal einspritzbar ist.

Links und rechts von der Öffnung 26 ist in dem Flansch 4 jeweils eine Befestigungsbohrung 24 ausgebildet, wobei jede Befestigungsbohrung 24 zur Aufnahme je eines nicht gezeigten Befestigungselementes ausgebildet ist. Jede der Befestigungsbohrungen 24 ist beispielsweise zumindest teilweise mit einem Innengewinde ausgebildet, um ein mit einem passenden Außengewinde ausgebildetes Befestigungselement, wie z.B. einen Gewindebolzen oder eine Schraube, aufzunehmen und zu fixieren.

Auf den Flansch 4 ist eine erfindungsgemäße Montageeinheit 2 aufgebracht. Die Montageeinheit 2 hat ein glockenförmiges Profil und weist in ihrem mittleren Bereich einen von dem Flansch 4 abstehenden Haltebereich 12 auf. Der Haltebereich 12 ist von einem flachen Randbereich 28 umgeben, der im Vergleich zu dem Haltebereich 12 nur eine geringe Höhe bzw. Dicke hat und weniger weit als der Haltebereich 12 von dem Flansch 4 absteht.

In den Randbereichen 28 der Montageeinheit 2 ist jeweils eine Bohrung 30 zur Aufnahme eines nicht gezeigten Befestigungselements ausgebildet. Die Montageeinheit 2 ist so auf dem Flansch 4 angeordnet, dass die in den Randbereichen 28 der Montageeinheit 2 ausgebildeten Bohrungen 30 jeweils direkt über einer der in dem Flansch 4 ausgebildeten Befestigungsbohrungen 24 angeordnet sind. Dadurch ist jeweils ein Befestigungselement durch eine im jeweiligen Randbereich 28 der Montageeinheit 2 ausgebildete Bohrung 30 in eine in dem Flansch 4 ausgebildete Befestigungsbohrung 24 einführbar.

In dem in der Figur gezeigten Ausführungsbeispiel ist auf der von dem Flansch 4 abgewandten Seite der Montageeinheit 2 an jeder Bohrung 30 jeweils eine zylinderförmige Dehnhülse 10 angeordnet. Durch die Dehnhülsen 10 ist jeweils ein, in der Figur nicht gezeigtes, Befestigungselement in die übereinander angeordneten Bohrungen 30 und 24 einführbar. Das Material der Dehnhülsen 10 ist so ausgewählt, dass die Dehnhülsen 10 eine ähnliche oder vorzugsweise die gleiche Wärmeausdehnung wie die nicht gezeigten Befestigungselemente aufweisen, so dass eine thermisch bedingte Längenausdehnung der Befestigungselemente durch eine entsprechende Längenausdehnung der zugehörigen Dehnhülse 10 ausgeglichen wird. Dies verhindert, dass sich die Befestigung der Montageeinheit 2 an dem Flansch 4 löst, wenn sich die Befestigungselemente aufgrund einer Temperaturerhöhung ausdehnen.

Zwischen den beiden flachen Randbereichen 28 der Montageeinheit 2 ist ein Haltebereich 12 mit einem glockenförmigen Profil ausgebildet. In der Mitte des Haltebereichs 12 ist eine parallel zu den Bohrungen 24, 30 verlaufende Ventilbohrung ausgebildet, in die ein Ventilkörper 6 eines Einspritzventils mit einem im Betrieb mit einem Fluid gefüllten Raum 8 eingefügt ist. Die Details des Einspritzventils, wie z.B. ein Ventilkolben, eine Ventilfeder oder ein Dichtsitz sind aus Gründen der Übersichtlichkeit in der Figur nicht gezeigt.

Bei geöffnetem Einspritzventil wird ein Fluid aus dem mit Fluid gefüllten Raum 8 in die unter dem Einspritzventil angeordnete Öffnung 26 im Flansch 4 eingespritzt und gelangt von dort in einen in der Figur nicht gezeigten, unterhalb der Öffnung 26 angeordneten Abgaskanal. Im Abgaskanal vermischt sich das eingespritzte Fluid mit dem durch den Abgaskanal strömenden Abgas.

Die Haltebereiche 12 sind so ausgebildet, dass zwischen dem Haltebereich 12 und den Befestigungselementen bzw. den die Befestigungselemente umgebenden Dehnhülsen 10 ein Luftspalt 13 verbleibt, wenn die nicht gezeigten Befestigungselemente in die übereinander angeordneten Bohrungen 30 und 24 eingebracht worden sind, um die Montageeinheit 2 an dem Flansch 4 zu befestigen.

Durch den Luftspalt 13 ist der Haltebereich 12 von den Befestigungselementen bzw. von den Dehnhülsen 10 thermisch isoliert. Wärmeübertragung von dem im Betrieb durch heiße Abgase erhitzten Flansch 4 über die Befestigungselemente und die Dehnhülsen 10 auf den Haltebereich 12 wird reduziert. Der Haltebereich 12 hat im Betrieb eine niedrigere Temperatur als der mit dem Abgasstrang verbundene Flansch 4. Das Fluid in dem mit Fluid gefüllten Raum 8 wird daher keinen hohen Temperaturen ausgesetzt und eine Alterung des einzuspritzenden Fluids wird zuverlässig vermieden.

Um die Bohrung, die zur Aufnahme des Ventilkörpers 6 vorgesehen ist, ist in dem Haltebereich 12 ein Kühlkanal 18 ausgebildet, der im Betrieb von einem Kühlmittel, wie z.B. Kühlwasser, durchströmt wird, um den Haltebereich 12 zu kühlen und das in dem mit Fluid gefüllten Raum 8 befindliche Fluid auf einer niedrigen Temperatur zu halten, bei der keine Alterung des Fluids eintritt. Der Kühlkanal 18 ist mit einem Zulauf 16 und einem Ablauf 14 versehen, um Kühlmittel von einer externen Kühlvorrichtung in den Kühlkanal 18 zuzuführen bzw. um das erwärmte Kühlmittel aus dem Kühlkanal 18 abzuführen und einer externen Kühlvorrichtung zuzuführen. Durch eine externe Kühlvorrichtung kann die Temperatur im Bereich des Einspritzventils weiter reduziert werden.

Der Kühlkanal 18 ist auf der dem Flansch 4 zugewandten Seite durch ein ventilseitiges Kühlblech 20 verschlossen, sodass kein Kühlmittel aus dem Kühlkanal 18 in die in dem Flansch 4 ausgebildete Öffnung 26 einströmt. Es entsteht ein geschlossener Kühlkreislauf und ein Kühlmittelverlust wird zuverlässig vermieden.

Zwischen dem Flansch 4 und der Montageeinheit 2 ist eine Dichteinheit 21 angeordnet. Die Dichteinheit 21 ist im mittleren Bereich der Montageeinheit 2 unter dem Einspritzventil 6 becherförmig ausgebildet, so dass im Bereich der Öffnung 26 zwischen der abgasstrangseitigen Dichteinheit 21 und dem ventilseitigen Kühlblech 20 ein Luftspalt 22 ausgebildet ist, der das Einspritzventil 6 und den im Betrieb mit Fluid gefüllten Raum 8 thermisch von den heißen Abgasen im Abgasstrang isoliert.

Im becherförmig ausgebildeten Bereich der Dichteinheit 21 ist eine Einspritzöffnung vorgesehen, durch die Fluid aus dem mit Fluid gefüllten Raum 8 durch die in dem Flansch 4 ausgebildete Öffnung 26 in den Abgaskanal einspritzbar ist.

Außerhalb der Öffnung 26 ist ein flach ausgebildeter äußerer Bereich der Dichteinheit 21 zwischen dem Flansch 4 und den Randbereichen 28 der Montageeinheit 2 angeordnet. Der flache, äußere Bereich der Dichteinheit 21 erstreckt sich bis über die zur Aufnahme der Befestigungselemente vorgesehenen Bohrungen 24, 30 hinaus und weist selbst entsprechende Öffnungen auf, die zum Durchführen von Befestigungselementen ausgebildet sind.

Durch die nicht gezeigten Befestigungselemente ist die Dichteinheit 21, wenn sie zwischen der der Montageeinheit 2 und dem Flansch 4 montiert ist, sicher fixiert und dichtet die Schnittstelle zwischen dem Flansch 4 und der Montageeinheit 2 zuverlässig ab, so dass weder Fluid noch Abgase über die Schnittstelle aus dem Abgaskanal entweichen können.

## Patentansprüche

1. Montageeinheit (2) zur Befestigung eines Einspritzorgans an einem Abgasstrang, wobei die Montageeinheit (2) einen Haltebereich (12) zur Aufnahme des Einspritzorgans und einen Randbereich (28) aufweist, wobei in dem Randbereich (28) wenigstens eine Öffnung (30) zur Aufnahme eines Befestigungselementes zur Befestigung der Montageeinheit (2) an dem Abgasstrang vorgesehen ist, und wobei die Montageeinheit (2) so ausgehildet ist, dass zwischen dem Befestigungselement und dem Haltebereich (12) ein Luftspalt (13) vorhanden ist, wenn die Montageeinheit (2) mit dem Befestigungselement an dem Abgasstrang befestigt ist, **dadurch gekennzeichnet, dass** an der Öffnung (30) zur Aufnahme eines Befestigungselementes eine Dehnhülse (10) zur Aufnahme des Befestigungselementes angeordnet ist, und dass die Montageeinheit (2) so ausgebildet ist, dass der Luftspalt (13) zwischen der Dehnhülse (10) und dem Haltebereich (12) ausgebildet ist, wenn die Montageeinheit (2) an dem Abgasstrang befestigt ist.

2. Montageeinheit (2) nach Anspruch 1, wobei in dem Haltebereich (12) ein Kühikanal (18) ausgebildet ist.

3. Montageeinheit (2) nach Anspruch 2, wobei der Kühlkanal (18) mit einem Zulauf (14) und mit einem Ablauf (16) versehen ist.

4. Montageeinheit (2) nach Anspruch 2 oder 3, wobei der Kühlkanal (18) auf der zur Montage an dem Abgasstrang vorgesehenen Seite durch ein Kühlblech (20) begrenzt ist.

5. Montageeinheit (2) nach Anspruch 4, wobei zwischen dem Abgasstrang und dem Kühlblech (20) eine Dichtung (21) angeordnet ist.

6. Montageeinheit (2) nach einem der vorangehenden Ansprüche, wobei der Haltebereich (12) mit einem glockenförmigen Profil ausgebildet ist.

7. Montageeinheit nach Anspruch 1, wobei die Dehnhülse (10) die gleiche Wärmeausdehnung wie der Haltebereich (12) hat.

8. Montageeinheit nach Anspruch 1 oder 7, wobei die Dehnhülse (10) die gleiche Wärmeausdehnung wie das Befestigungselement hat.

9. Montageeinheit nach einem der vorangehenden Ansprüche, wobei in dem Haltebereich (12) eine Bohrung (8) zur Aufnahme des Einspritzorgans ausgebildet ist.

10. Abgasnachbehandlungsanordnung zum Einspritzen eines Fluids in einen Abgasstrang mit einer Montageeinheit (2) nach einem der vorangehenden Ansprüche und einem Einspritzorgan, das zum Einspritzen des Fluids ausgebildet und im Haltebereich (12) der Montageeinheit (2) angeordnet ist.

11. Abgasnachbehandlungsanordnung nach Anspruch 11, wobei das Einspritzorgan ein Einspritzventil ist.

## Claims

1. Mounting unit (2) for fastening an injection member to an exhaust-gas section, the mounting unit (2) having a holding region (12) for receiving the injection member and an edge region (28), at least one opening (30) being provided in the edge region (28) for receiving a fastening element for fastening the mounting unit (2) on the exhaust-gas section, and the mounting unit (2) being configured in such a way that there is an air gap (13) between the fastening element and the holding region (12) when the mounting unit (2) is fastened to the exhaust-gas section by way of the fastening element, **characterized in that** an expanding sleeve (10) for receiving a fastening element is arranged at the opening (30) for receiving the fastening element, and **in that** the mounting unit (2) is configured in such a way that the air gap (13) is formed between the expanding sleeve (10) and the holding region (12) when the mounting unit (2) is fastened to the exhaust-gas section.

2. Mounting unit (2) according to Claim 1, a cooling duct (18) being formed in the holding region (12).

3. Mounting unit (2) according to Claim 2, the cooling duct (18) being provided with an inlet (14) and an outlet (16).

4. Mounting unit (2) according to Claim 2 or 3, the cooling duct (18) being delimited by a cooling plate (20) on the side which is provided for mounting on the exhaust-gas section.

5. Mounting unit (2) according to Claim 4, a seal (21) being arranged between the exhaust-gas section and the cooling plate (20).

6. Mounting unit (2) according to one of the preceding claims, the holding region (12) being configured with a bell-shaped profile.

7. Mounting unit according to Claim 1, the expanding sleeve (10) exhibiting the same thermal expansion as the holding region (12).

8. Mounting unit according to Claim 1 or 7, the expanding sleeve (10) exhibiting the same thermal expansion as the fastening element.

9. Mounting unit according to one of the preceding claims, a hole (8) for receiving the injection member being formed in the holding region (12).

10. Exhaust-gas aftertreatment arrangement for injecting a fluid into an exhaust-gas section having a mounting unit (2) according to one of the preceding claims and an injection member which is configured for injecting the fluid and is arranged in the holding region (12) of the mounting unit (2).

11. Exhaust-gas aftertreatment arrangement according to Claim 11, the injection member being an injection valve.

## Revendications

1. Unité de montage (2) pour fixer un organe d'injection sur une ligne des gaz d'échappement, l'unité de montage (2) comprenant une zone de retenue (12) pour recevoir l'organe d'injection et une zone de bord (28), au moins une ouverture (30) pour recevoir un élément de fixation pour fixer l'unité de montage (2) sur la ligne des gaz d'échappement étant prévue dans la zone de bord (28), et l'unité de montage (2) étant réalisée de telle sorte qu'un espace d'air (13) soit présent entre l'élément de fixation et la zone de retenue (12) lorsque l'unité de montage (2) est fixée sur la ligne des gaz d'échappement à l'aide de l'élément de fixation, **caractérisée en ce qu'**une douille expansible (10) pour recevoir l'élément de fixation est disposée sur l'ouverture (30) pour recevoir un élément de fixation, et **en ce que** l'unité de montage (2) est réalisée de telle sorte que l'espace d'air (13) entre la douille expansible (10) et la zone de retenue (12) soit réalisé lorsque l'unité de montage (2) est fixée sur la ligne des gaz d'échappement.

2. Unité de montage (2) selon la revendication 1, dans laquelle un canal de refroidissement (18) est réalisé dans la zone de retenue (12).

3. Unité de montage (2) selon la revendication 2, dans laquelle le canal de refroidissement (18) est pourvu d'une entrée (14) et d'une sortie (16).

4. Unité de montage (2) selon la revendication 2 ou 3, dans laquelle, du côté prévu pour le montage sur la ligne des gaz d'échappement, le canal de refroidissement (18) est limité par une tôle de refroidissement (20).

5. Unité de montage (2) selon la revendication 4, dans laquelle un joint d'étanchéité (21) est disposé entre la ligne des gaz d'échappement et la tôle de refroidissement (20).

6. Unité de montage (2) selon l'une quelconque des revendications précédentes, dans laquelle la zone de retenue (12) est réalisée avec un profil en forme de cloche.

7. Unité de montage selon la revendication 1, dans laquelle la douille expansible (10) présente la même dilatation thermique que la zone de retenue (12).

8. Unité de montage selon la revendication 1 ou 7, dans laquelle la douille expansible (10) présente la même dilatation thermique que l'élément de fixation.

9. Unité de montage selon l'une quelconque des revendications précédentes, dans laquelle un alésage (8) pour recevoir l'organe d'injection est réalisé dans la zone de retenue (12).

10. Agencement de post-traitement des gaz d'échappement pour l'injection d'un fluide dans une ligne des gaz d'échappement comprenant une unité de montage (2) selon l'une quelconque des revendications précédentes et un organe d'injection qui est réalisé pour l'injection du fluide et qui est disposé dans la zone de retenue (12) de l'unité de montage (2).

11. Agencement de post-traitement des gaz d'échappement selon la revendication 11, dans lequel l'organe d'injection est une soupape d'injection.
